# EUROPEAN PATENT APPLICATION

(11) **EP 4 741 977 A1**
(43) Date of publication of application: **13.05.2026**
(21) Application number: 24835389.8
(22) Date of filing: 04.07.2024
(51) Int. Cl.: G05D 1/43, A47L 11/40, A47L 11/24

(54) **AUTONOMOUS MOBILE DEVICE, AND CONTROL METHOD AND APPARATUS THEREFOR, AND STORAGE MEDIUM**

(30) Priority: 05.07.2023 CN 202310817479
(71) Applicant: Qfeeltech (Beijing) Co., Ltd., Beijing 100191 (CN)
(72) Inventor: GAO, Shaoxuan, Beijing 100191 (CN)
(74) Representative: Carpmaels & Ransford LLP
(86) International application number: PCT/CN2024/103505
(87) International publication number: WO 2025/007909

(57) **Abstract**

An autonomous mobile apparatus, a control method and device thereof, and a storage medium. The control method for the autonomous mobile apparatus comprises: determining whether a first obstacle exists within a first spatial range in front of the autonomous mobile apparatus based on a point cloud data in front of the autonomous mobile apparatus (S120); based on the determination that the first obstacle does not exist within the first spatial range, determining whether an impassable under-clearance obstacle exists within a second spatial range in front of the autonomous mobile apparatus based on the point cloud data in front of the autonomous mobile apparatus, the second spatial range is above the first spatial range, the under-clearance obstacle is different from the first obstacle, the under-clearance obstacle has a lower space at its lower part that allows at least a part of the autonomous mobile apparatus to enter (S130); and executing an obstacle avoidance operation to avoid the impassable under-clearance obstacle based on the determination that the impassable under-clearance obstacle exists within the second spatial range in front of the autonomous mobile apparatus (S140). Therefore, the under-clearance obstacle may be determined and avoided.

## Description

### TECHNICAL FIELD

The present disclosure relates to the field of smart home technologies, and in particular, to an autonomous mobile apparatus, a control method and device thereof, and a storage medium.

### BACKGROUND

Generally, an autonomous mobile apparatus needs to autonomously move within a working space (for example, a house of a user), and determine an obstacle and a passable area based on different types of sensors, to avoid the obstacle and enter the passable area for working. For example, a front obstacle (such as a wall, a refrigerator, or a floor cabinet) is sensed through a front collision by using a collision sensor, and a front or side relatively short-distance obstacle (such as a wall) is sensed by using a proximity sensor. The autonomous mobile apparatus may take avoidance or escape actions based on the information of the above sensors to avoid these obstacles.

However, in the related art, an autonomous mobile apparatus, especially an autonomous mobile apparatus with an obvious protrusion part (for example, a turret provided with a laser radar) on an upper surface, may encounter an under-clearance obstacle with a certain space below during operation, and may be difficult to escape. An under-clearance obstacle refers to an object with a lower space at its lower part, such as furniture with a space at the lower part thereof, such as a bed, a table, a cabinet, a sofa, etc., supported by legs. According to the size of the lower space of the under-clearance obstacle, it can be divided into a passable under-clearance obstacle that can allow all of the autonomous mobile apparatus to enter or pass, and an impassable under-clearance obstacle that can only allow a part of the autonomous mobile apparatus to enter but cannot allow the autonomous mobile apparatus to pass. When the autonomous mobile apparatus enters the lower space of the under-clearance obstacle, the under-clearance obstacle is located above the autonomous mobile apparatus, and for the autonomous mobile apparatus that can only perceive the front and side obstacles, when the autonomous mobile apparatus enters the lower space, the protrusion part may be easily stuck at the bottom of the under-clearance obstacle, and it is also easy to damage the sensor of the autonomous mobile apparatus and cause damage to the under-clearance obstacle (such as a wall or furniture) that the autonomous mobile apparatus collides with.

A method for solving this problem in the related art is generally as follows: in a process that an autonomous mobile apparatus is entering an under-clearance obstacle, a sensor provided at a lower position of a front part of the autonomous mobile apparatus relative to a protrusion part detects whether there is an obstacle at a set distance above the autonomous mobile apparatus, but due to a fast running speed of the autonomous mobile apparatus, a short warning distance, and a calculation delay of a processor, it is still possible that when the autonomous mobile apparatus that has partially entered a bottom of the under-clearance obstacle has not yet determined the risk, the protrusion part of the autonomous mobile apparatus has already been stuck by the bottom of the under-clearance obstacle or trapped in a lower space of the under-clearance obstacle, and damage to the autonomous mobile apparatus, furniture, and home appliances still cannot be avoided.

### SUMMARY

In view of this, the present disclosure provides an autonomous mobile apparatus, a control method and device thereof, and a storage medium, so that an impassable under-clearance obstacle in front of the autonomous mobile apparatus can be determined and avoided as early as possible, thereby effectively avoiding the autonomous mobile apparatus from being stuck or trapped in a lower space of the impassable under-clearance obstacle, and avoiding damage to a sensor of the autonomous mobile apparatus and the impassable under-clearance obstacle.

According to a first aspect of the present disclosure, there is provided a control method of an autonomous mobile apparatus, comprising: a first determination step, configured to determine whether a first obstacle exists within a first spatial range in front of the autonomous mobile apparatus according to a point cloud data in front of the autonomous mobile apparatus; a second determination step, configured to determine, based on the determination that the first obstacle does not exist within the first spatial range in front of the autonomous mobile apparatus, whether an impassable under-clearance obstacle exists within a second spatial range in front of the autonomous mobile apparatus according to the point cloud data in front of the autonomous mobile apparatus, the second spatial range is above the first spatial range, wherein the under-clearance obstacle is different from the first obstacle, the under-clearance obstacle has a lower space at its lower part that is configured to allow at least a part of the autonomous mobile apparatus to enter, and the lower space of the impassable under-clearance obstacle cannot allow the autonomous mobile apparatus to completely enter or pass; and an execution step, configured to execute an obstacle avoidance operation to avoid the impassable under-clearance obstacle based on the determination that the impassable under-clearance obstacle exists within the second spatial range in front of the autonomous mobile apparatus.

According to a second aspect of the present disclosure, there is provided a control device of an autonomous mobile apparatus, comprising: a first determination part configured to determine whether a first obstacle exists within a first spatial range in front of the autonomous mobile apparatus according to a point cloud data in front of the autonomous mobile apparatus; a second determination part configured to determine, based on the determination that the first obstacle does not exist within the first spatial range in front of the autonomous mobile apparatus, whether an impassable under-clearance obstacle exists within a second spatial range in front of the autonomous mobile apparatus according to the point cloud data in front of the autonomous mobile apparatus, the second spatial range is above the first spatial range, wherein the under-clearance obstacle is different from the first obstacle, the under-clearance obstacle has a lower space at its lower part that is configured to allow at least a part of the autonomous mobile apparatus to enter, and the lower space of the impassable under-clearance obstacle cannot allow the autonomous mobile apparatus to completely enter or pass; and an execution part configured to execute an obstacle avoidance operation to avoid the impassable under-clearance obstacle based on the determination that the impassable under-clearance obstacle exists within the second spatial range in front of the autonomous mobile apparatus.

According to a third aspect of the present disclosure, there is provided a control device of an autonomous mobile apparatus, comprising: one or more processors; and a memory storing instructions, wherein the instructions, when executed by the one or more processors, cause the one or more processors to perform the control method according to the first aspect.

According to a fourth aspect of the present disclosure, there is provided an autonomous mobile apparatus, comprising: a motion part configured to move the autonomous mobile apparatus over a work surface in a work area; and the control device according to the second aspect or the third aspect.

According to a fifth aspect of the present disclosure, there is provided a non-transitory computer-readable storage medium, wherein when instructions in the storage medium are executed by a processor, the processor is enabled to execute the control method according to the first aspect.

According to the present disclosure, compared with the prior art in which the autonomous mobile apparatus may encounter an under-clearance obstacle with a lower space during operation and may become trapped in under-clearance obstacle and difficult to escape, the autonomous mobile apparatus of the present disclosure determines whether an impassable under-clearance obstacle exists within the second spatial range in front of the autonomous mobile apparatus according to the point cloud data in front of the autonomous mobile apparatus, and executes an obstacle avoidance operation for avoiding the under-clearance obstacle in a case where it is determined that an impassable under-clearance obstacle exists within the second spatial range in front of the autonomous mobile apparatus, so that the impassable under-clearance obstacle in front can be determined and avoided as early as possible, thus it may avoid the autonomous mobile apparatus from being stuck or trapped in the lower space of the impassable under-clearance obstacle, and may avoid damage to the sensor of the autonomous mobile apparatus and the impassable under-clearance obstacle.

Other features and aspects of the present disclosure will become apparent from the following detailed description of exemplary embodiments with reference to the accompanying drawings.

### BRIEF DESCRIPTION OF THE DRAWINGS

The accompanying drawings, which are incorporated in and constitute a part of this specification, illustrate exemplary embodiments, features, and aspects of the present disclosure and, together with the description, serve to explain the principles of the disclosure.
FIG. 1 is a schematic diagram of an autonomous mobile apparatus in the related art not avoiding an under-clearance obstacle.
FIG. 2 is a flowchart of a control method of an autonomous mobile apparatus according to an exemplary embodiment.
FIG. 3 is a schematic diagram of an autonomous mobile apparatus according to an exemplary embodiment.
FIG. 4 is a schematic diagram of an autonomous mobile apparatus acquiring an environment image according to an exemplary embodiment.
FIG. 5a is a schematic diagram of an application scenario of an autonomous mobile apparatus according to an exemplary embodiment.
FIG. 5b is a schematic diagram of an application scenario of an autonomous mobile apparatus according to an exemplary embodiment.
FIG. 5c is a schematic diagram of a first spatial range and a second spatial range according to an exemplary embodiment.
FIG. 6 is a flowchart of a control method of an autonomous mobile apparatus according to an exemplary embodiment.
FIG. 7 is a block diagram of a control device of an autonomous mobile apparatus according to an exemplary embodiment.

### DETAILED DESCRIPTION

Various exemplary embodiments, features and aspects of the present disclosure will be described in detail below with reference to the accompanying drawings. The same reference numbers in the drawings indicate elements with the same or similar functions. While the various aspects of the embodiments are presented in drawings, the drawings are not necessarily drawn to scale unless specifically indicated.

The word "exemplary" is used exclusively herein to mean "serving as an example, embodiment, or illustration". Any embodiment described herein as "exemplary" is not necessarily to be construed as preferred or advantageous over other embodiments.

In addition, in order to better illustrate the present disclosure, numerous specific details are given in the following specific embodiments. It will be understood by those skilled in the art that the present disclosure may be practiced without some of the specific details. In some examples, methods, means, elements and circuits well known to those skilled in the art are not described in detail, so as to highlight the subject matter of the present disclosure.

An under-clearance obstacle refers to an object with a lower space at its lower part, such as furniture with a space at the lower part thereof, such as a bed, a table, a cabinet, a sofa, etc., supported by legs, which can be divided into a passable under-clearance obstacle that can allow all of the autonomous mobile apparatus to enter or pass and a impassable under-clearance obstacle that can only allow a part of the autonomous mobile apparatus to enter but cannot allow all of the autonomous mobile apparatus to enter or pass according to the size of the lower space of the under-clearance obstacle.

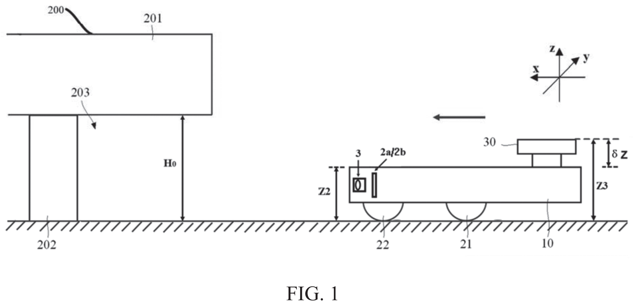

Referring to FIG. 1, the under-clearance obstacle 200 includes a transverse shielding part 201 and a longitudinal shielding part 202, the longitudinal shielding part 202 is supported on the ground, and the transverse shielding part 201 is spaced apart from the ground by a certain distance under the support of the longitudinal shielding part 202. The lower part of the under-clearance obstacle 200 has a lower space 203 defined by the lower surface of the transverse shielding part 201 and the ground, and the height of the lower space 203 is the distance H0 between the transverse shielding part 201 and the ground.

The autonomous mobile apparatus 10 includes motion parts 21 and 22 for moving the autonomous mobile apparatus 10 over a work surface in a work area. A specific form of the motion part may be a wheel or a track, or certainly may be another form that can carry the movement of objects, for example, a motion part in a form of magnetic suspension or a propeller. The present disclosure does not limit the specific form of the motion part.

As shown in FIG. 1, the top of the body of the autonomous mobile apparatus 10 is provided with a protrusion part 30, and the protrusion part 30 may be provided with a laser radar or other components and devices, which are not limited in the present disclosure. The distance from the upper surface of the protrusion part 30 (i.e., the highest position of the autonomous mobile apparatus) to the ground (i.e., the lowest position of the autonomous mobile apparatus) (i.e., the height of the autonomous mobile apparatus) is Z3, the distance from the highest position of the body of the autonomous mobile apparatus 10 other than the protrusion part 30 (e.g., the top of the body of the autonomous mobile apparatus 10 other than the protrusion part 30 in FIG. 1) to the ground is Z2, and the height of the protrusion part 30 is δZ = Z3 - Z2. In the spatial coordinate system shown in FIG. 1, the autonomous mobile apparatus 10 runs along the x-axis direction (that is, the running forward direction of the autonomous mobile apparatus 10 is the x-axis direction, as shown by the arrow in FIG. 1), and the z-axis direction is the direction perpendicular to the work surface (such as the ground), that is, the height direction.

Referring to FIG. 1, if the autonomous mobile apparatus 10 enters the lower space 203 of the under-clearance obstacle 200, and the height H0 of the lower space 203 is less than the height Z3 of the autonomous mobile apparatus, the protrusion part 30 of the autonomous mobile apparatus 10 may collide with the bottom of the under-clearance obstacle 200 or be stuck on the under-clearance obstacle 200, which may cause the autonomous mobile apparatus 10 to be stuck or trapped, which may not only affect the normal operation of the autonomous mobile apparatus 10, but also may damage the sensor provided in the protrusion part 30 of the autonomous mobile apparatus 10, and may also cause the under-clearance obstacle 200 (such as indoor furniture or home appliances) to be damaged.

To this end, considering that the autonomous mobile apparatus can collect and update the point cloud data, and calculate the obstacle information in the surrounding environment according to the point cloud data (such as calculating the relative coordinates and absolute coordinates of the obstacle, and calculating the distance between the autonomous mobile apparatus and each obstacle in the surrounding environment, etc.), according to the present disclosure, the autonomous mobile apparatus determines whether an impassable under-clearance obstacle exists in front according to the point cloud data in front, and if it is determined that an impassable under-clearance obstacle exists, the autonomous mobile apparatus executes the obstacle avoidance operation to avoid the under-clearance obstacle as early as possible. Therefore, the present disclosure can determine and may avoid the impassable under-clearance obstacle, thereby preventing the autonomous mobile apparatus from being stuck or trapped in the lower space of the under-clearance obstacle, thus it may avoid damaging the sensor of the autonomous mobile apparatus and the under-clearance obstacle, and address the above problems.

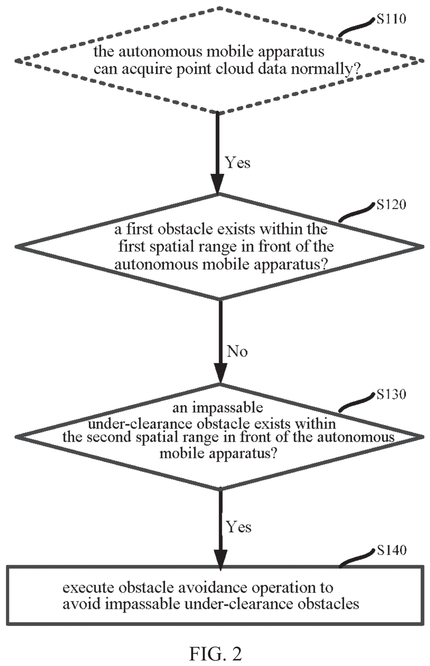

Based on the above concept, the control method of the autonomous mobile apparatus shown in FIG. 2 is proposed, and the control method is executed by the autonomous mobile apparatus. The autonomous mobile apparatus refers to an intelligent mobile apparatus that executes a predetermined task over a work surface within a work area, and may include, but is not limited to: a Robot Vacuum Cleaner (RVC), such as an intelligent floor sweeper, an intelligent floor moper, a window cleaning robot, and the like; a logistics robot, a transport robot, and the like; a weeding robot, a scooping robot, and the like; a companion mobile robot, such as an intelligent electronic pet, a babysitter robot; a service mobile robot, such as a reception robot at a hotel, a hostel, or a meeting place; an industrial inspection intelligent apparatus, such as an electric inspection robot, an intelligent forklift, and the like; and a security robot, such as a household or commercial intelligent guard robot. It should be noted that the autonomous mobile apparatus is not limited to the foregoing several types, and any apparatus having an autonomous mobile function should belong to the autonomous mobile apparatus described in this embodiment.

### Implementation 1:

Referring to FIG. 2, the control method of this exemplary embodiment may include the following steps.

In step S120 (first determination step), whether a first obstacle exists within a first spatial range in front of the autonomous mobile apparatus is determined according to the point cloud data in front of the autonomous mobile apparatus.

During operation of the autonomous mobile apparatus, point cloud data is collected and updated in real time as the autonomous mobile apparatus moves. When the autonomous mobile apparatus runs, spatial coordinates of the autonomous mobile apparatus in an absolute coordinate system may be acquired by using a positioning system or a positioning algorithm (for example, a Simultaneous Localization and Mapping (SLAM) algorithm), and the autonomous mobile apparatus may calculate spatial coordinates of point cloud data around the autonomous mobile apparatus.

In this embodiment, a line laser provided substantially perpendicular to the ground may be used to emit a line laser substantially perpendicular to the ground to the front of the autonomous mobile apparatus, when the line laser irradiates an obstacle in front, a light spot is formed on the surface of the obstacle (that is, a laser point that irradiates the obstacle in front and is blocked by the obstacle in front and is generated on the surface of the obstacle), and then an image acquisition part provided in front of the autonomous mobile apparatus photographs the front of the autonomous mobile apparatus to acquire an image containing the light spot; and spatial coordinates of each laser point are calculated from the image to acquire point cloud data, that is, the point cloud data is a light spot or a laser point of with known spatial coordinates. The spatial coordinates of each laser point in the point cloud data in the absolute coordinate system can be calculated according to the spatial coordinates (relative coordinates) of each laser point in the relative coordinate system of the autonomous mobile apparatus in combination with the coordinates of the autonomous mobile apparatus in the absolute coordinate system. For a specific calculation method, refer to Laser Scanner Calibration Dependency on the Line Detection Method (Martens, et al. Elektronika Ir Elektrotechnika (2015).) and Low-Cost 3d Laser Scanning In Air Or Water Using Self-Calibrating Structured Light (Bleier M, A Niichter. 3D ARCH 2017. 2017.).

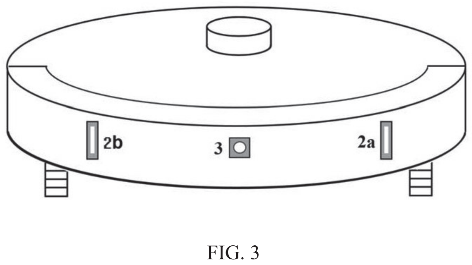

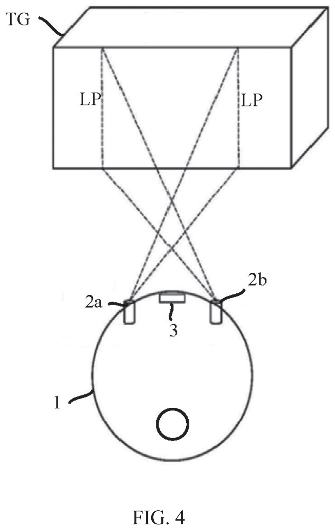

In an exemplary embodiment, two line lasers and an image acquisition part are taken as an example. In the autonomous mobile apparatus shown in FIG. 3 and FIG. 4, an image acquisition part 3 (for example, a camera) is provided at the central position of the front of the apparatus body 1, and two line lasers 2a and 2b substantially perpendicular to the ground are respectively provided on the left and right sides of the image acquisition part 3. When the autonomous mobile apparatus operates normally, the two line lasers 2a and 2b emit a line laser substantially perpendicular to the ground to the front of the autonomous mobile apparatus, and if there is an obstacle in front of the autonomous mobile apparatus, the obstacle will block the line laser, so that the line laser presents several laser points LP on the obstacle. An image of the front of the apparatus body 1 is acquired by the image acquisition part 3, and the image usually includes an obstacle TG in front of the apparatus body 1 and a light spot/laser point LP irradiated onto the obstacle TG. In the indoor work area, common obstacles TG include, but are not limited to, walls, furniture, home appliances, steps, thresholds, etc. Further, the image is processed to acquire spatial coordinates of each laser point LP to obtain point cloud data, and parameters such as a distance between the autonomous mobile apparatus and the obstacle TG (hereinafter referred to as a distance of the obstacle TG) can also be obtained. In the present disclosure, an image including an obstacle surface and having laser points on the obstacle surface may also be referred to as an environment image.

The two line lasers 2a, 2b and the image acquisition part 3 implementing the above functions are generally referred to as three-dimensional spatial sensors (3D sensors).

Since the line laser is provided in a direction substantially perpendicular to the ground, the image acquisition part can acquire the laser points in front of and below the autonomous mobile apparatus, and acquire the point cloud data in front of and below the autonomous mobile apparatus through calculation; for the non-horizontally provided line laser, in the process of going straight or turning of the autonomous mobile apparatus, the image acquisition part can also acquire the laser points on the side of the autonomous mobile apparatus, and acquire the point cloud data on the side of the autonomous mobile apparatus through calculation, so the laser points around the autonomous mobile apparatus collected by the image acquisition part include the laser points in front of, on the side of, and below (also referred to as the bottom) of the autonomous mobile apparatus, and the point cloud data in front of, on the side of, and below (also referred to as the bottom) of the autonomous mobile apparatus can be acquired through calculation. In some embodiments, after the point cloud data around the autonomous mobile apparatus is obtained, the point cloud data in front of the autonomous mobile apparatus may be screened from the point cloud data according to the spatial coordinates of the point cloud data, especially the point cloud data within a certain spatial range in front of the autonomous mobile apparatus. In a possible implementation, point cloud data whose spatial coordinates are within the first spatial range may be screened from the acquired point cloud data.

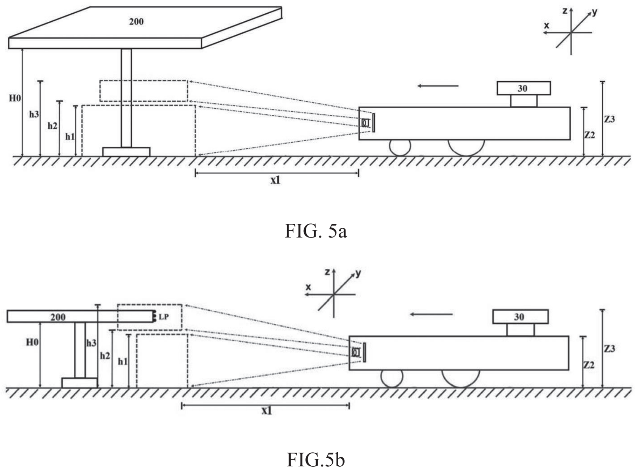

The first spatial range may be a spatial volume, for example, may be a regular spatial body (such as a sphere, an ellipsoid, a cylinder, a cone, a cube, a cuboid, or a polygonal pyramid) or an irregular spatial body. For example, in some embodiments, as shown in FIG. 5b, the first spatial range may be a spatial body V1 (corresponding to the first area) at a first distance X1 (e.g., 16 cm) from the front of the autonomous mobile apparatus, and the spatial body V1 has a first width b1 (e.g., 30 cm), a first length a1 (e.g., 8 cm), and a first height h1 (e.g., 10 cm). The present disclosure does not limit the dimension and shape of the first spatial range. The first spatial range has a first height h1 in a direction perpendicular to the ground (that is, a z-axis direction perpendicular to the ground in the spatial coordinate system), that is, a highest point of the first spatial range in the z-axis direction of the spatial coordinate system does not exceed the first height h1. For example, if the ground is used as the point 0 of the z-axis, the z-axis coordinate of the highest point of the first spatial range is h1. In some embodiments, as shown in FIG. 5a, the first height h1 of the first spatial range is comparable to or slightly higher than the highest height Z2 of the autonomous mobile apparatus other than the protrusion part. However, in some embodiments, the first height h1 of the first spatial range is comparable to or slightly higher than the highest height Z3 of the autonomous mobile apparatus. It should be noted that the first height h1 here is calculated from the ground, that is, based on the ground; as an optional embodiment, the lowest height h0 may also be set for the first spatial range, and at this time, the first height h1 is the difference between the highest height and the lowest height h0 of the first spatial range.

After the point cloud data within the first spatial range in front of the autonomous mobile apparatus is obtained, whether the first obstacle exists within the first spatial range in front of the autonomous mobile apparatus may be determined according to the point cloud data within the first spatial range in front (such as the distribution of each laser point or the quantity of laser points in the point cloud data). The first obstacle is a common obstacle that will inevitably block the autonomous mobile apparatus from moving forward, that is, the first obstacle does not have a lower space (for example, the first obstacle includes but is not limited to a pillar, a garbage can, a wall, a floor cabinet, etc.); in other words, the first obstacle is an obstacle other than an under-clearance obstacle. For a definition of the under-clearance obstacle, refer to the foregoing descriptions. It should be understood that the under-clearance obstacle has a space in the lower part that can allow at least a part of the autonomous mobile apparatus to enter; for example, referring to FIG. 1, the under-clearance obstacle 200 has a lower space 203 that can allow at least a part of the autonomous mobile apparatus 10 to enter. Since the lower part of the first obstacle is a solid substance (for example, the lower part of the wall is still a solid wall), and there is no lower space, the autonomous mobile apparatus cannot enter the lower part of the first obstacle and can only be blocked by the first obstacle.

In a possible implementation, it may be determined, based on whether the first spatial range in front of the autonomous mobile apparatus includes the point cloud data, whether a first obstacle exists within the first spatial range in front of the autonomous mobile apparatus.

In an actual possible implementation, whether the first obstacle exists within the first spatial range in front of the autonomous mobile apparatus may be determined according to whether a sufficient quantity of point cloud data is acquired from the first spatial range in front of the autonomous mobile apparatus. For this implementation, refer to Implementation 3 below for details.

If it is determined that the first obstacle exists within the first spatial range in front of the autonomous mobile apparatus, the autonomous mobile apparatus usually needs to avoid the first obstacle at this time, so it is not necessary to detect the under-clearance obstacle, and thus the above first determination step, i.e., step S120, continues to be executed along with the operation of the autonomous mobile apparatus; if it is determined that the first obstacle does not exist within the first spatial range in front of the autonomous mobile apparatus, the following step S130 is executed.

In step S130 (second determination step), it is determined, according to the point cloud data in front of the autonomous mobile apparatus, whether an impassable under-clearance obstacle exists within a second spatial range in front of the autonomous mobile apparatus. The under-clearance obstacle is different from the first obstacle; the under-clearance obstacle has a lower space at its lower part that can allow at least a part of the autonomous mobile apparatus to enter; and the lower space of the impassable under-clearance obstacle cannot allow the autonomous mobile apparatus to completely enter or pass.

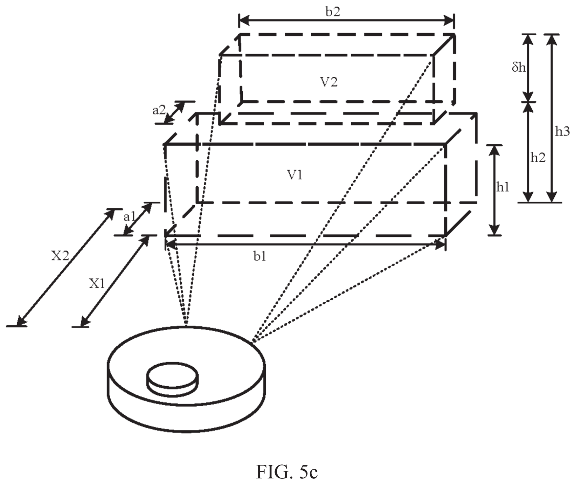

In some embodiments, point cloud data whose spatial coordinates are within the second spatial range may be screened from the acquired point cloud data. The second spatial range may be a spatial volume, for example, the corresponding spatial body may be a regular spatial body (such as a sphere, an ellipsoid, a cylinder, a cone, a cube, a cuboid, or a polygonal pyramid) or an irregular spatial body. For example, in some embodiments, as shown in FIG. 5c, the second spatial range may be a spatial body V2 (corresponding to the second area) at a second distance X2 (for example, 18 cm) from the front of the autonomous mobile apparatus, and the spatial body V2 has a second width b2 (for example, the second width may be a diameter of a widest part of the apparatus body of the autonomous mobile apparatus, or the second width may also be a diameter of a widest part of the protrusion part 30 of the autonomous mobile apparatus), a second length a2, and a height δh of the second spatial range. The present disclosure does not limit the dimension and shape of the second spatial range. The second spatial range has a second height h2 and a third height h3 in the direction perpendicular to the ground (i.e., the z-axis direction perpendicular to the ground in the spatial coordinate system); wherein the second height h2 is the lowest height of the second spatial range, and in some embodiments, the second height h2 is greater than or equal to the first height h1 of the first spatial range; the third height h3 is the maximum height of the second spatial range, so the third height h3 is necessarily greater than the second height h2. That is, the lowest point of the second spatial range in the z-axis direction of the spatial coordinate system is not less than the second height h2, and the highest point does not exceed the third height h3. That is, the second spatial range is defined the range between the second height h2 and the third height h3 in the z-axis direction perpendicular to the ground, and thus the height of the second spatial range δh = h3 - h2. For example, if the ground is used as the point 0 of the z-axis, the z-axis coordinate of the lowest point of the second spatial range is h2, and the z-axis coordinate of the highest point thereof is h3. In some embodiments, the lowest height of the second spatial range, i.e., the second height h2, is comparable to or slightly higher than the highest height Z2 of the autonomous mobile apparatus other than the protrusion part 30. In some embodiments, the maximum height of the second spatial range, i.e., the third height h3, is comparable to or slightly higher than the height Z3 of the autonomous mobile apparatus. It should be noted that, in some embodiments, the lowest point of the second spatial range in the z-axis direction of the spatial coordinate system may also be less than the second height h2 or the first height h1, and may even be less than or equal to the lowest height h0 of the first spatial range.

In a possible implementation, it may be determined, based on whether the second spatial range in front of the autonomous mobile apparatus includes the point cloud data, whether an impassable under-clearance obstacle exists within the second spatial range in front of the autonomous mobile apparatus.

In an actual possible implementation, it may be determined, according to whether a sufficient quantity of point cloud data is acquired from the second spatial range in front of the autonomous mobile apparatus, and whether a product of a maximum length of a laser point and a maximum width of the laser point within the second spatial range is greater than an area threshold, whether an impassable under-clearance obstacle exists within the second spatial range in front of the autonomous mobile apparatus. For this implementation, refer to Implementation 3 below for details.

If it is determined that an impassable under-clearance obstacle exists within the second spatial range in front of the autonomous mobile apparatus, since the impassable under-clearance obstacle will jam the protrusion part 30 of the autonomous mobile apparatus after a part of the autonomous mobile apparatus enters the lower space of the impassable under-clearance obstacle, the autonomous mobile apparatus needs to perform the obstacle avoidance operation as early as possible, so the following execution step S140 continues to be executed; otherwise, if it is determined that impassable under-clearance obstacle does not exist within the second spatial range in front of the autonomous mobile apparatus, the operation continues to be executed in the original operation mode, and the execute step S120 or S130 continues to be executed.

In step S140 (execution step), an obstacle avoidance operation is executed to avoid the impassable under-clearance obstacle.

In the case where it is determined in advance that there is an impassable under-clearance obstacle in front before running to the lower part of the under-clearance obstacle, in order to avoid that the autonomous mobile apparatus may be trapped and difficult to escape, sufficient time is provided for the autonomous mobile apparatus to execute an obstacle avoidance operation for avoiding the impassable under-clearance obstacle, such as retreating and/or turning.

In a possible implementation, in a case that an impassable under-clearance obstacle exists within the second spatial range in front of the autonomous mobile apparatus, the autonomous mobile apparatus may be enabled to retreat a first distance from the current position, and the autonomous mobile apparatus may be enabled to rotate by a first angle to avoid the impassable under-clearance obstacle in the front. It should be understood that the present disclosure is not limited thereto, and the obstacle avoidance operation may further include other operations capable of avoiding an impassable under-clearance obstacle.

Within the work area of the implementation of FIG. 5a, there is a table, the lower part of which has table legs and forms a lower space between the table legs, and thus the table may be the under-clearance obstacle 200 described in the present disclosure. As shown in FIG. 5a, the height H0 of the lower space of the under-clearance obstacle 200 is the distance from the ground to the bottom of the tabletop. In this embodiment, the height H0 of the lower space is greater than the first height h1 of the first spatial range, and is also greater than the second height h2 and greater than the third height h3 of the second spatial range (in this embodiment, it is assumed that the table leg is not within the first spatial range or the second spatial range). During the operation of the autonomous mobile apparatus, point cloud data around the autonomous mobile apparatus (that is, the laser points hitting the surface of the obstacle and their spatial coordinates) may be obtained via the 3D sensor, and point cloud data within a first spatial range (that is, a range lower than the first height h1) in front of the autonomous mobile apparatus is screened from the point cloud data according to the spatial coordinates of the point cloud data, in the embodiment shown in FIG. 5a, no point cloud data is acquired or very little point cloud data is acquired within the first spatial range, and it is determined that first obstacle does not exist within the first spatial range; then, point cloud data within a second spatial range (that is, a range between the second height h2 and the third height h3) in front of the autonomous mobile apparatus is screened from the point cloud data according to the spatial coordinates of the point cloud data, and in the embodiment shown in FIG. 5a, no point cloud data is acquired or very little point cloud data is acquired within the second spatial range, and it is determined that impassable under-clearance obstacle 200 does not exist within the second spatial range at the distance X1 from the front of the autonomous mobile apparatus, so the autonomous mobile apparatus may continue to operate in the original operation mode and operation route.

The difference between the embodiment of FIG. 5b and the embodiment of FIG. 5a is only that the height H0 of the lower space of the table (i.e., the under-clearance obstacle 200) within the work area is greater than the second height h2 of the second spatial range but less than the third height h3, that is, the tabletop is within the second spatial range. During the operation of the autonomous mobile apparatus, point cloud data around the autonomous mobile apparatus (that is, the laser points hitting the surface of the obstacle and their spatial coordinates) may be obtained via the 3D sensor, and point cloud data within a first spatial range (that is, a range lower than the first height h1) in front of the autonomous mobile apparatus is screened from the point cloud data according to the spatial coordinates of the point cloud data, in the embodiment shown in FIG. 5b, no point cloud data is acquired or very little point cloud data is acquired within the first spatial range, and it is determined that first obstacle does not exist within the first spatial range; then, point cloud data within a second spatial range (that is, a range between the second height h2 and the third height h3) in front of the autonomous mobile apparatus is screened from the point cloud data according to the spatial coordinates of the point cloud data, and in the embodiment shown in FIG. 5b, the point cloud data (corresponding to the laser point LP in FIG. 5b) acquired within the second spatial range meets the condition that the autonomous mobile apparatus detects an impassable under-clearance obstacle within the second spatial range, thus it is determined that an impassable under-clearance obstacle 200 exists within the second spatial range at a distance X1 from the front of the autonomous mobile apparatus. Before the autonomous mobile apparatus has not entered the lower space of the impassable under-clearance obstacle 200, an obstacle avoidance operation is executed to avoid the impassable under-clearance obstacle 200.

Therefore, compared with the prior art in which the autonomous mobile apparatus may encounter an under-clearance obstacle having a lower space during operation and may be trapped in the under-clearance obstacle, the autonomous mobile apparatus of the present disclosure determines whether an impassable under-clearance obstacle exists within the second spatial range in front of the autonomous mobile apparatus according to the point cloud data in front, so that the impassable under-clearance obstacle in front can be determined as early as possible. Moreover, if it is determined that an impassable under-clearance obstacle exists within the second spatial range in front of the autonomous mobile apparatus, the obstacle avoidance operation is executed to avoid the impassable under-clearance obstacle, thus it may avoid the autonomous mobile apparatus from being stuck or trapped in the lower space of the impassable under-clearance obstacle, and avoid damage to the sensors of the autonomous mobile apparatus and the impassable under-clearance obstacle (usually furniture or home appliances).

Based on the technical solution described in Implementation 1, Implementation 2 can be acquired by further introducing step S110.

### Implementation 2:

Referring to FIG. 2, the control method includes the following steps.

In step S110 (third determination step), it is determined whether the autonomous mobile apparatus can normally acquire point cloud data according to the point cloud data below the autonomous mobile apparatus.

In this embodiment, similarly as described above with respect to Implementation 1, during the operation of the autonomous mobile apparatus, point cloud data around the autonomous mobile apparatus (i.e., the laser points hitting the surface of the obstacle and their spatial coordinates) may be obtained via the 3D sensor, and the point cloud data below the autonomous mobile apparatus may be screened from the point cloud data according to the spatial coordinates of the point cloud data; whether the autonomous mobile apparatus can normally acquire the point cloud data may be determined according to the point cloud data below the autonomous mobile apparatus (such as the distribution of each laser point or quantity of laser points in the point cloud data).

In a possible implementation, whether the autonomous mobile apparatus can normally acquire the point cloud data may be determined based on whether the lower part of the autonomous mobile apparatus includes the point cloud data.

In an actual possible implementation, whether the autonomous mobile apparatus can normally acquire the point cloud data may be determined according to whether a sufficient quantity of point cloud data is acquired from below the autonomous mobile apparatus. For this implementation, refer to Implementation 3 below for details.

If it is determined that the autonomous mobile apparatus cannot acquire the point cloud data normally, it indicates that the 3D sensor of the autonomous mobile apparatus does not work normally at this time, and subsequent detection of the first obstacle and the second obstacle cannot be performed, and an error or alarm information may be sent at this time. If it is determined that the autonomous mobile apparatus can normally acquire the point cloud data, it indicates that the 3D sensor of the autonomous mobile apparatus can normally work at this time, so the 3D sensor may be used to perform the first determination step S120 to detect the first obstacle.

Similar to Implementation 1, in step S120, whether a first obstacle exists within a first spatial range in front of the autonomous mobile apparatus is determined according to the point cloud data in front of the autonomous mobile apparatus. If the determination is "yes", the first determination step S120 continues to be executed along with the operation of the autonomous mobile apparatus; if the determination is "no", the second determination step S130 continues to be executed.

In step S130, it is determined, according to the point cloud data in front of the autonomous mobile apparatus, whether an impassable under-clearance obstacle exists within a second spatial range in front of the autonomous mobile apparatus. If the determination is "Yes", the following execution step S140 continues to be executed; if the determination is "No", the operation continues to be executed in the original operation mode, and the execution step S120 or S130 continues to be executed.

In step S140, an obstacle avoidance operation is executed to avoid the impassable under-clearance obstacle.

For steps S120 to S140, refer to the descriptions of steps S120 to S140 in Implementation 1 for details, which is not repeated here.

Therefore, the autonomous mobile apparatus of the present disclosure first determines whether the autonomous mobile apparatus can normally acquire the point cloud data according to the point cloud data below the autonomous mobile apparatus, so as to determine whether the 3D sensor of the autonomous mobile apparatus can normally work, and performs the subsequent steps of S110 in the control method shown in FIG. 2 only when the autonomous mobile apparatus can normally acquire the point cloud data, thus it may avoid the possible damage to the autonomous mobile apparatus caused by failing to detect a potential obstacle in front by still executing the detection of the obstacle (i.e., steps S120 to S130) in the case where the autonomous mobile apparatus cannot normally acquire the point cloud data (i.e., the 3D sensor cannot normally work).

Based on the technical solution described in Implementation 1, Implementation 3 may be further acquired by specifically expanding steps S120 and S130.

### Implementation 3:

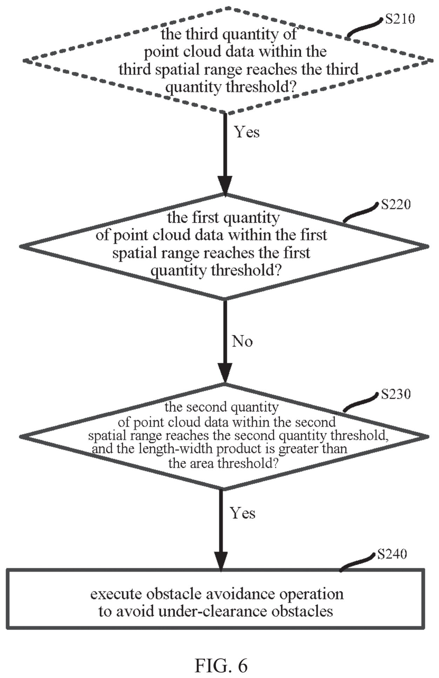

FIG. 6 shows a flowchart of a control method of an autonomous mobile apparatus according to an exemplary embodiment. As shown in FIG. 6, the control method includes the following steps.

In step S220, it is determined whether a first quantity of point cloud data within the first spatial range reaches a first quantity threshold. For the first spatial range, refer to the description of the first determination step of step S120 in Implementation 1 for details, which is not repeated here.

In this embodiment, the point cloud data within the first spatial range in front of the autonomous mobile apparatus may be obtained in the manner described in Implementation 1, and the quantity (the first quantity) of the point cloud data within the first spatial range in front may be calculated to determine whether the first obstacle exists within the first spatial range in front.

The first quantity may be compared with a set first quantity threshold (for example, 20); if the first quantity is greater than or equal to the first quantity threshold, it indicates that there are a sufficient quantity of point cloud data within the first spatial range, and it may be determined that a first obstacle exists within the first spatial range in front of the autonomous mobile apparatus, and at this time, the autonomous mobile apparatus usually needs to avoid the first obstacle, so it is not necessary to detect an under-clearance obstacle, and therefore, step S220 continues to be executed along with the operation of the autonomous mobile apparatus. Otherwise, the following step S230 continues to be executed.

In step S230, it is determined whether the second quantity of the point cloud data within the second spatial range reaches a second quantity threshold (hereinafter referred to as "second quantity determination"), and whether a product (hereinafter referred to as "length-width product") of the maximum length of the laser points and the maximum width of the laser points within the second area is greater than an area threshold (hereinafter referred to as "area determination"). For the second area, refer to the description of the second determination step of step S130 in Implementation 1 for details, which is not repeated here.

In this embodiment, the point cloud data within the second spatial range in front of the autonomous mobile apparatus may be obtained in the manner described in Implementation 1, and the quantity (the second quantity) of the point cloud data within the second spatial range in front and the length-width product of the laser points are calculated to determine whether an impassable under-clearance obstacle exists within the second spatial range in front.

The second quantity may be compared with a set second quantity threshold (for example, 40), and the length-width product of the laser points within the second area (that is, within the second spatial range) may be further compared with a set area threshold (for example, 0.01 cm2). If the second quantity is greater than or equal to the second quantity threshold and the length-width product is greater than the area threshold, it may be determined that an impassable under-clearance obstacle exists within the second spatial range in front of the autonomous mobile apparatus, so the autonomous mobile apparatus needs to perform the obstacle avoidance operation as early as possible, and the following execution step S240 continues to be executed. Otherwise, if the second quantity is less than the second quantity threshold and/or the length-width product of the laser points within the second spatial range is less than the area threshold, the operation continues to be executed in the original operation mode, and the foregoing step S220 or S230 continues to be executed.

It should be noted that this embodiment does not limit the order of the second quantity determination and the area determination, and the second quantity determination may be performed first and then the area determination, or the area determination may be performed first and then the second quantity determination, or the second quantity determination and the area determination may be performed simultaneously.

In step S240, an obstacle avoidance operation is executed to avoid the under-clearance obstacle. For step S240, refer to the description of the execution step of step S140 in Implementation 1 for details, which is not repeated here.

Therefore, the autonomous mobile apparatus of the present disclosure determines, according to whether there is a sufficient quantity of point cloud data within the second spatial range in front and whether the length-width product of the laser points within the second spatial range is greater than the area threshold, whether an impassable under-clearance obstacle exists within the second spatial range in front of the autonomous mobile apparatus, so that the impassable under-clearance obstacle in front can be determined as early as possible.

Based on the technical solution described in Implementation 1 or Implementation 3, Implementation 4 can be acquired by further introducing step S210.

### Implementation 4:

Referring to FIG. 6, the control method includes the following steps.

In step S210, it is determined whether a third quantity of point cloud data within a third spatial range reaches a third quantity threshold.

The third spatial range may be a spatial volume, and for example, the corresponding spatial body may be a regular spatial body (such as a cylinder, etc.). For example, in some embodiments, the third spatial range may be a third area with a center of the autonomous mobile apparatus as an origin, a radius of the third area is a radius of a widest part of the apparatus body of the autonomous mobile apparatus, and a height of the third area is a third height h3 (for example, a height from -2 cm to 1 cm). Thus, the third spatial range may encompass a partial spatial range below the autonomous mobile apparatus.

In this embodiment, point cloud data whose spatial coordinates are within the third spatial range may be screened from the acquired point cloud data, and then whether the autonomous mobile apparatus can normally acquire the point cloud data is determined based on a quantity (the third quantity) of the point cloud data within the third spatial range.

The third quantity may be compared with a set third quantity threshold (for example, 20); if the third quantity is greater than or equal to the third quantity threshold, it is determined that the autonomous mobile apparatus can normally acquire the point cloud data, indicating that the 3D sensor of the autonomous mobile apparatus can normally work at this time, and therefore, the 3D sensor may be used to perform the first determination step S120 or S220 to detect the first obstacle. Otherwise, it indicates that the 3D sensor of the autonomous mobile apparatus does not work normally at this time, and subsequent detection of the first obstacle and the second obstacle cannot be performed, and at this time, an error or alarm information may be sent.

The subsequent steps take Implementation 3 as an example. In step S220, it is determined whether a first quantity of point cloud data within the first spatial range reaches a first quantity threshold. If the determination is "No", the step S230 continues to be executed; otherwise, if the determination is "Yes", the S220 continues to be executed along with the operation of the autonomous mobile apparatus.

In step S230, it is determined whether the second quantity of point cloud data within the second spatial range reaches a second quantity threshold, and whether a length-width product of laser points within the second area is greater than an area threshold. If the determination is "yes", it is determined that an impassable under-clearance obstacle exists within the second spatial range in front of the autonomous mobile apparatus, so the autonomous mobile apparatus needs to perform the obstacle avoidance operation as early as possible, and then the subsequent execution step S240 continues to be executed; otherwise, the autonomous mobile apparatus continues to operate in the original operation mode, and continues to execute step S220 or S230.

In step S240, an obstacle avoidance operation is executed to avoid the under-clearance obstacle.

For steps S220 to S240, refer to the descriptions of steps S220 to S240 in Implementation 3 for details, which is not repeated here.

In this embodiment, the autonomous mobile apparatus of the present disclosure first determines whether the autonomous mobile apparatus can normally acquire the point cloud data according to whether there is a sufficient quantity of point cloud data within the third spatial range below the autonomous mobile apparatus, so as to determine whether the 3D sensor of the autonomous mobile apparatus can normally work, and detects the obstacle in subsequent steps only when the autonomous mobile apparatus can normally acquire the point cloud data, thus it may avoid possible damage to the autonomous mobile apparatus caused by failing to detect a potential obstacle in front by still executing detection of the obstacle (i.e., steps S120 to S130 or steps S220 to S230) in the case where the autonomous mobile apparatus cannot normally acquire the point cloud data.

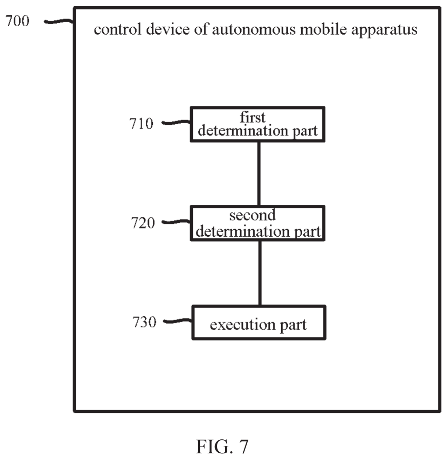

FIG. 7 shows a block diagram of a control device of an autonomous mobile apparatus according to an exemplary embodiment, and as shown in FIG. 7, the control device 700 may include a first determination part 710, a second determination part 720 and an executing part 730.

The first determination part 710 may determine whether a first obstacle exists within a first spatial range in front of the autonomous mobile apparatus according to the point cloud data in front of the autonomous mobile apparatus. The second determination part 720 is connected to the first determination part 710, and the second determination part 720 may be configured to determine, when the first determination part 710 determines that the first obstacle does not exist within the first spatial range in front of the autonomous mobile apparatus, whether an impassable under-clearance obstacle exists within a second spatial range in front of the autonomous mobile apparatus according to the point cloud data in front of the autonomous mobile apparatus, the second spatial range is over the first spatial range, wherein the under-clearance obstacle is different from the first obstacle, the under-clearance obstacle has a lower space at its lower part that can allow at least a part of the autonomous mobile apparatus to enter, and the lower space of the impassable under-clearance obstacle cannot allow the autonomous mobile apparatus to completely enter or pass. The execution part 730 is connected to the second determination part 720, and the execution part 730 may be used to execute an obstacle avoidance operation to avoid the impassable under-clearance obstacle when the second determination part 720 determines that the impassable under-clearance obstacle exists within the second spatial range in front of the autonomous mobile apparatus.

In a possible implementation, the first determination part 710 may be configured to: determine whether a first quantity of point cloud data within the first spatial range reaches a first quantity threshold, where the first spatial range is a first area that is at a first distance from the front of the autonomous mobile apparatus, has a first length, has a first width, and has a first height, and the first height is greater than or equal to a maximum height of the autonomous mobile apparatus other than the protrusion part; and when it is determined that the first quantity does not reach the first quantity threshold, determine that the first obstacle does not exist within the first spatial range in front of the autonomous mobile apparatus.

In a possible implementation, the second determination part 720 may be configured to: determine whether a second quantity of point cloud data within the second spatial range reaches a second quantity threshold, where the second spatial range is a second area that is at a second distance from the front of the autonomous mobile apparatus, has a second length, has a second width, and has a second height; determine whether a product of a maximum length of a laser point and a maximum width of the laser point within the second area is greater than an area threshold; and when it is determined that the second quantity reaches the second quantity threshold, and it is determined that the product of the maximum length of the laser point and the maximum width of the laser point within the second area is greater than the area threshold, determine that the impassable under-clearance obstacle exists within the second spatial range in front of the autonomous mobile apparatus.

In a possible implementation, the control device 700 may further include: a third determination part (not shown), used to determine, based on the point cloud data below the autonomous mobile apparatus, whether the autonomous mobile apparatus can normally acquire the point cloud data, where when it is determined that the autonomous mobile apparatus can normally acquire the point cloud data, the first determination part 710 determines whether the first obstacle exists within the first spatial range in front of the autonomous mobile apparatus.

In a possible implementation, the third determination part may be configured to: determine whether a third quantity of point cloud data within a third spatial range reaches a third quantity threshold; and when it is determined that the third quantity reaches the third quantity threshold, determine that the autonomous mobile apparatus can normally acquire the point cloud data, where the third spatial range is a third area with a center of the autonomous mobile apparatus as an origin, a radius of the autonomous mobile apparatus as a radius, and a height as a third height.

In a possible implementation, the execution part 730 may be configured to cause the autonomous mobile apparatus to retreat a first distance from a current position, and cause the autonomous mobile apparatus to rotate by a first angle.

Regarding the device in the above embodiments, the specific manner in which each part executes operations has been described in detail in the embodiments related to the method, and will not be described in detail here.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the each embodiment disclosed herein.

## Claims

1. A control method for an autonomous mobile apparatus, comprising:
a first determination step, determining whether a first obstacle exists within a first spatial range in front of the autonomous mobile apparatus based on a point cloud data in front of the autonomous mobile apparatus;
a second determination step, responsive to a determination that the first obstacle does not exist within the first spatial range in front of the autonomous mobile apparatus, determining whether an impassable under-clearance obstacle exists within a second spatial range in front of the autonomous mobile apparatus based on the point cloud data in front of the autonomous mobile apparatus, the second spatial range is above the first spatial range, wherein the under-clearance obstacle is different from the first obstacle, the under-clearance obstacle has a lower space at its lower part that is configured to allow at least a part of the autonomous mobile apparatus to enter, and the lower space of the impassable under-clearance obstacle does not allow the autonomous mobile apparatus to completely enter or pass; and
an execution step, executing an obstacle avoidance operation to avoid the impassable under-clearance obstacle based on a determination that the impassable under-clearance obstacle exists within the second spatial range in front of the autonomous mobile apparatus.

2. The control method according to claim 1, wherein the first determination step comprises:
determining whether a first quantity of point cloud data within the first spatial range reaches a first quantity threshold, where the first spatial range is a first area that is at a first distance from a front of the autonomous mobile apparatus, which has a first length, a first width, and a first height, and the first height is greater than or equal to a maximum height of the autonomous mobile apparatus other than a protrusion part of the mobile apparatus; and
based on a determination that the first quantity does not reach the first quantity threshold, determining that the first obstacle does not exist within the first spatial range in front of the autonomous mobile apparatus.

3. The control method according to claim 1, wherein the second determination step comprises:
determining whether a second quantity of point cloud data within the second spatial range reaches a second quantity threshold, wherein the second spatial range is a second area that is at a second distance from the front of the autonomous mobile apparatus, which has a second length, a second width, and a second height;
determining whether a product of a maximum length of laser points within the second area and a maximum width of the laser points is greater than an area threshold;
based on a determination that the second quantity reaches the second quantity threshold, and a determination that the product of the maximum length of the laser points within the second area and the maximum width of the laser points is greater than the area threshold, determining that the impassable under-clearance obstacle exists within the second spatial range in front of the autonomous mobile apparatus.

4. The control method according to any one of claims 1 to 3, wherein before the first determination step, the control method further comprises:
a third determination step, determining whether the point cloud data is acquirable normally by the autonomous mobile apparatus based on the point cloud data below the autonomous mobile apparatus,
based on a determination that the point cloud data is acquirable normally by the autonomous mobile apparatus, the first determination step is executed.

5. The control method according to claim 4, wherein the third determination step comprises:
determining whether a third quantity of point cloud data within a third spatial range reaches a third quantity threshold;
based on a determination that the third quantity reaches the third quantity threshold, determining that the point cloud data is acquirable normally by the autonomous mobile apparatus,
wherein the third spatial range is a third area with a center of the autonomous mobile apparatus as an origin, a radius of the autonomous mobile apparatus as a radius, and a height thereof as a third height.

6. The control method according to any one of claims 1 to 3, wherein executing the obstacle avoidance operation comprises:
causing the autonomous mobile apparatus to retreat a first distance from a current location and causing the autonomous mobile apparatus to rotate by a first angle.

7. A control device of an autonomous mobile apparatus, comprising:
a first determination part configured to determine whether a first obstacle exists within a first spatial range in front of the autonomous mobile apparatus based on a point cloud data in front of the autonomous mobile apparatus;
a second determination part configured to determine, based on the determination that the first obstacle does not exist within the first spatial range in front of the autonomous mobile apparatus, whether an impassable under-clearance obstacle exists within a second spatial range in front of the autonomous mobile apparatus based on the point cloud data in front of the autonomous mobile apparatus, the second spatial range is above the first spatial range, wherein the under-clearance obstacle is different from the first obstacle, the under-clearance obstacle has a lower space at its lower part that is configured to allow at least a part of the autonomous mobile apparatus to enter, and the lower space of the impassable under-clearance obstacle does not allow the autonomous mobile apparatus to completely enter or pass; and
an execution part configured to execute an obstacle avoidance operation to avoid the impassable under-clearance obstacle based on the determination that the impassable under-clearance obstacle exists within the second spatial range in front of the autonomous mobile apparatus.

8. A control device for an autonomous mobile apparatus, comprising:
one or more processors; and
a memory storing instructions,
wherein the instructions, when executed by the one or more processors, cause the one or more processors to perform the control method according to any of claims 1 to 6.

9. An autonomous mobile apparatus, comprising:
a motion part configured to move the autonomous mobile apparatus over a work surface in a work area; and
the control device according to claim 7 or 8.

10. A non-transitory computer-readable storage medium, wherein when instructions in the storage medium are executed by a processor, the processor is enabled to execute the control method according to any one of claims 1 to 6.
